# EUROPÄISCHE PATENTSCHRIFT

(11) **EP 0 719 428 B1**
(45) Veröffentlichungstag und Bekanntmachung des Hinweises auf die Patenterteilung: **10.06.1998**
(21) Anmeldenummer: 94928339.4
(22) Anmeldetag: 13.09.1994
(51) Int. Cl.: G05B 19/4061

(54) **VERFAHREN ZUR ZWEIDIMENSIONALEN ARBEITSRAUMKONTURERMITTLUNG FÜR DREHMASCHINEN**
PROCESS FOR THE TWO-DIMENSIONAL DETERMINATION OF A WORK-AREA CONTOUR FOR LATHES
PROCEDE POUR LA DETERMINATION BIDIMENSIONNELLE DES CONTOURS D'UNE ZONE DE TRAVAIL DES TOURS

(30) Priorität: 13.09.1993 DE 4331034
(43) Veröffentlichungstag der Anmeldung: 03.07.1996
(73) Patentinhaber: Dr. Johannes Heidenhain GmbH, 83301 Traunreut (DE)
(72) Erfinder: RÖPER, Klaus, D-30900 Wedemark (DE)
(86) Internationale Anmeldenummer: EP9403055
(87) Internationale Veröffentlichungsnummer: WO9508142

(56) Entgegenhaltungen:
- EP-A- 0 089 561
- EP-A- 0 104 409
- EP-A- 0 450 113
- WERKSTATTTECHNIK Bd. 78, Nr. 9, September 1988, BERLIN DE, Seiten 509 - 514 U. PILLAND 'Echzeit-Kollisionsschutzsysteme für NC-Drehmaschine'
- KONSTRUKTION, Bd.37, Nr.10, Oktober 1985, BERLIN DE Seiten 387 - 394 H. DIEDENHOVEN 'CAM-Aufgaben lösen mit CAD-Algorithmen'

## Beschreibung

Die Erfindung betrifft ein Verfahren zur zweidimensionalen Arbeitsraumkonturermittlung für numerisch gesteuerte Drehmaschinen nach dem Oberbegriff des Anspruches 1.

Da Kollisionen in der Regel zu größeren Schäden führen, die sowohl durch Reparaturkosten als auch durch Ausfallzeiten verursacht werden, ist man bemüht, derartige Kollisionen durch Überwachung des Arbeitsvorganges zu vermeiden.

Zur Kollisionsüberwachung ist es bekannt, eine Sensorik vorzusehen, die beispielsweise aus einer oder mehreren Kameras besteht, die an eine Bildauswerteeinheit angeschlossen werden und Kollisionsfälle im Voraus erkennen und somit verhindern können.
Andere Sensoren bestimmen die Kräfte, die in einer Drehmaschine, insbesondere am Werkzeug und der Werkzeughalterung auftreten.

Während die Bildauswertung den Nachteil hat, sehr aufwendig und damit teuer zu sein, werden bei der Bestimmung der Kräfte Kollisionen erst erkannt, nachdem sie eingetreten sind und möglicherweise bereits einen, wenn auch geringen, Schaden verursacht haben.

Es sind weiterhin Verfahren zur Kollisionsüberwachung bekannt, die ohne Sensorik auskommen, indem mittels geometrischer Berechnungen mögliche Kollisionspunkte berechnet werden, die dann während des Bearbeitungsvorganges nicht zugelassen werden. Auf diese Weise wird ein Arbeitsraum definiert, der nicht verlassen werden darf.
Der Nachteil dieser Verfahren liegt in der hohen Datenmenge, die verarbeitet werden muß. Dies führt zu großen Rechenzeiten, die eine Online-Überwachung nicht zulassen, wenn nicht ausreichend große Rechnerleistung zur Verfügung steht.

Diese hohe Datenmenge kann zwar im Fall von Drehmaschinen erheblich reduziert werden, da der Drehprozess im Wesentlichen durch zweidimensionale Berechnungen beschrieben werden kann und somit auch der Arbeitsraum nur zweidimensional bestimmt werden muß. Trotz dieser Vereinfachung ist jedoch noch eine große Datenmenge zu verarbeiten, die eine Online-Überwachung nur mit großer Rechenleistung ermöglicht.

Aus der europäischen Offenlegungsschrift EP O 450 113 Al ist ein Digitalisierverfahren bekannt, bei dem zur Erfassung von Geometriedaten räumlicher Werkstücke, die mit Spannmitteln auf einer Maschine befestigt sind, mit einem Tastkopf das Werkstück abgetastet wird, wobei auch die Umgebung des Werkstückes abgetastet und die Tastsignale des Tastkopfes sowohl zur Bildung der Geometriedaten des Werkstückes als auch zur Kollisionsprüfung mit Werkzeugen, die ebenfalls abgetastet werden können, verwendet wird.

Der Nachteil dieses Verfahrens liegt darin, daß beispielsweise beim Einsatz von mehreren Werkzeugen zur Bearbeitung eines Werkstückes für jeden Werkzeugwechsel durch neue Abtastung eine Schutzzone gebildet werden muß, wodurch ein großer Zeitverlust entsteht.
Ferner stellen die abgetasteten Werte eine konkrete Situation dar, die beispielsweise beim nächsten Werkstück nicht mehr die gleiche ist, wenn die Position auch nur ein wenig verändert ist.

Es stellt sich deshalb die Aufgabe, ein Verfahren zur zweidimensionalen Arbeitsraumkonturermittlung vorzusehen, bei dem die Arbeitsraumkontur für die Kollisionsprüfung mit vertretbarem Aufwand an Rechnerleistung ermittelt werden kann, wobei das Verfahren sicher und flexibel anwendbar sein soll.

Diese Aufgabe wird ausgehend von einem Verfahren nach dem Oberbegriff des Anspruches 1 durch die kennzeichnenden Merkmale des Anspruches 1 gelöst.

Nach Bestimmung einer Schutzzone und eines Arbeitsraumes werden im folgenden Schritt erfindungsgemäß die Kontureckpunkte sowohl der Schutzzone als auch des Werkzeugkonturzuges bestimmt und als Koordinatenwerte gespeichert. Zur Ermittlung einer zulässigen Arbeitsraumkontur werden die so gewonnenen Kontureckpunkte der Schutzzone und des Werkzeugkonturzuges jeweils für einander zugeordnete monotone Teilabschnitte paarweise überlagert und für jede Überlagerung werden die Koordinatenwerte eines Bezugspunktes errechnet. Aus den Koordinatenwerten jedes Konturzuges für einen monotonen Teilabschnitt der Schutzzone werden diejenigen Koordinatenwerte ausgewählt, die miteinander verbunden einen monotonen Konturzug ergeben.

Aus der europäischen Offenlegungsschrift EP-A 0 089 556 ist eine Werkzeugmaschinensteuerung mit einer Kollisionsüberwachungsfunktion bekannt. Es wird dort eine Werkstückschutzzone und eine Werkzeugschutzzone definiert, die außerhalb der äußeren Abmessungen des Werkstückes bzw. Werkzeuges liegen. Ferner wird, basierend auf dem NC-Programm, ein Werkzeugweg ermittelt. Auf Grundlage des Werkzeugweges, der Werkzeugschutzzone und der Werkstückschutzzone wird überprüft, ob bei der Verfahrbewegung zur Bearbeitung des Werkstückes eine Schutzzone verletzt wird. Bei Verletzung der Schutzzone wird auf einer Anzeigeeinheit der Bediener auf die mögliche Kollision hingewiesen.
Da dieser Stand der Technik dem erfindungsgemäßen Verfahren nach Ansicht der Anmelderin am nächsten kommt, wurde er zur Bildung des Oberbegriffes herangezogen.

Aus dem Artikel ,,Echtzeit-Kollisionsschutzsysteme für NC-Drehmaschinen", U. Pilland, wt Werkstattechnik 78 (1988), S. 509 - 514, ist es bekannt, zur Kollisionsüberwachung bei Werkzeugmaschinen ein Simulationsverfahren einzusetzen, bei dem ein Arbeitsraum erzeugt wird. Dieser Arbeitsraum beinhaltet die Werkzeugmaschine mit Schlitten, die Werkzeuge, das Werkstück und alle übrigen Baugruppen, die an einer Kollision beteiligt sein könnten. Bei diesem Simulationsverfahren sollen alle Steuerungsvorgänge möglichst genau wiedergegeben werden. Zur Darstellung des Arbeitsraumes werden die Grenzkonturen des Werkzeuges und des Werkstückes sowie der Werkzeug- und Werkstückumgebung mittels Polygonzügen bestimmt. Eine Kollision wird erkannt, wenn sich Teile der Polygonzüge überlappen.

Der Vorteil der Erfindung liegt darin, daß mit wenig Rechnerleistung ein Arbeitsraum ermittelt wird, der vom Bezugspunkt während des Arbeitsvorganges nicht verlassen werden darf. Insbesondere wird er Arbeitsraumkonturzug durch die paarweise Überlagerung der Koordinateneckpunkte der Schutzzone und des Werkzeugkonturzuges mit einer geringen Menge von zu verarbeitenden Daten bestimmt, so daß eine Online-Kollisionsüberwachung ermöglicht wird, ohne die Rechnerleistung zu erhöhen.

Gemäß einer vorteilhaften Ausgestaltung der Erfindung wird für die Schutzzone eine Durchlaufrichtung bestimmt und bezüglich dieser Durchlaufrichtung wird die Schutzzone in monoton steigende und monoton fallende Bereiche aufgeteilt. Für jeden dieser monoton steigenden bzw. fallenden Bereiche der Schutzzone werden die Kontureckpunkte mit den entsprechenden Kontureckpunkten der monoton steigenden bzw. fallenden Abschnitte des Werkzeugkonturzuges paarweise überlagert und für jede Überlagerung die Koordinaten des Bezugspunktes errechnet. Diese Koordinaten werden für jeden monotonen Teilabschnitt in Durchlaufrichtung der Größe nach geordnet und diejenigen Koordinatenpunkte ausgewählt, deren Koordinatenwert in der zur Durchlaufrichtung senkrechten Richtung größer ist als die zum zuvor ausgewählten Koordinatenpunkt. Für monoton fallende Teilabschnitte wird für die Punkteauswahl die entgegengesetzte Durchlaufrichtung gewählt.

Bei mehreren gleichen Koordinatenwerten in Durchlaufrichtung wird der Koordinatenpunkt für die Bildung der Arbeitsraumkontur ausgewählt, der den größten Koordinatenwert in zur Durchlaufrichtung senkrechter Richtung aufweist.

Durch diese Ausgestaltung der Erfindung wird in vorteilhafter Weise erreicht, daß auch bei komplexeren Formen der Schutzzone bzw. des Werkzeuges und/oder der Werkzeughalterungen für die verschiedenen Bereiche eine einfache Ermittlung des Arbeitsraumes ermöglicht wird. Der Gesamtarbeitsraum bzw. die Gesamtarbeitsraumgrenzen werden durch Überlagerung der einzelnen Bereichsgrenzen erreicht.

Eine weitere vorteilhafte Ausgestaltung der Erfindung sieht vor, daß die Schutzzone aus den Komponentenbeschreibungen und den Rüstdaten der Drehmaschine errechnet wird. Auf diese Weise kann der Konturzug für die Schutzzone weitgehend ohne zusätzliche Daten bestimmt werden. Die für die Bearbeitung mit einer Drehmaschine ohnehin erforderlichen Daten aus der Komponentenbeschreibung und der Rüstdaten können somit auch für die Beschreibung der Schutzzone benutzt werden.

Für die Abarbeitung eines Bearbeitungsprogrammes einer Drehmaschine wird in der Regel die Werkzeugspitze als maßgeblicher Bezugspunkt für die Abarbeitung gewählt. Es wird deshalb in vorteilhafter Weise auch bei der Bestimmung des Arbeitsraumes als Bezugspunkt die Werkzeugspitze ausgewählt.

Gemäß einer weiteren vorteilhaften Ausgestaltung der Erfindung erfolgt die Berechnung der Arbeitsraumgrenzen bei der Steuerungsinitialisierung, bei einem Aufruf der Betriebsarten, nach einer Änderung des Aggregatzustandes, bei einem Werkzeugwechsel oder bei der Änderung der Werkzeugkorrekturen. Die Arbeitsraumgrenzen werden also immer dann neu bestimmt, wenn sich irgendeine Änderung in der Gesamtkonfiguration ergibt.

In vorteilhafter Weise wird bei der Abarbeitung eines NC-Programmes in der Betriebsart Automatik vor der Ausführung eines jeden Satzes mit Verfahranweisung überprüft, ob der programmierte Weg, also die Werkzeugbewegung, innerhalb des Arbeitsraumes abläuft. Ist dies nicht der Fall, kann bereits vor Beginn dieser Verfahrbewegung ein Fehlersignal ausgegeben werden.

In der Betriebsart Handsteuern wird dagegen kein Fehlersignal ausgegeben, die Verfahrbewegung wird nur bis an eine Arbeitsraumgrenze zugelassen.

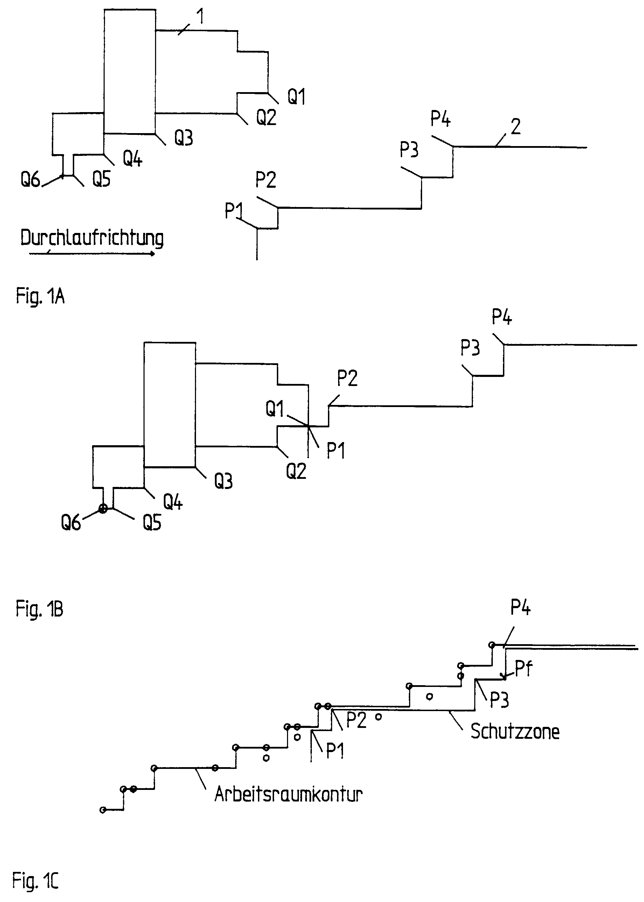

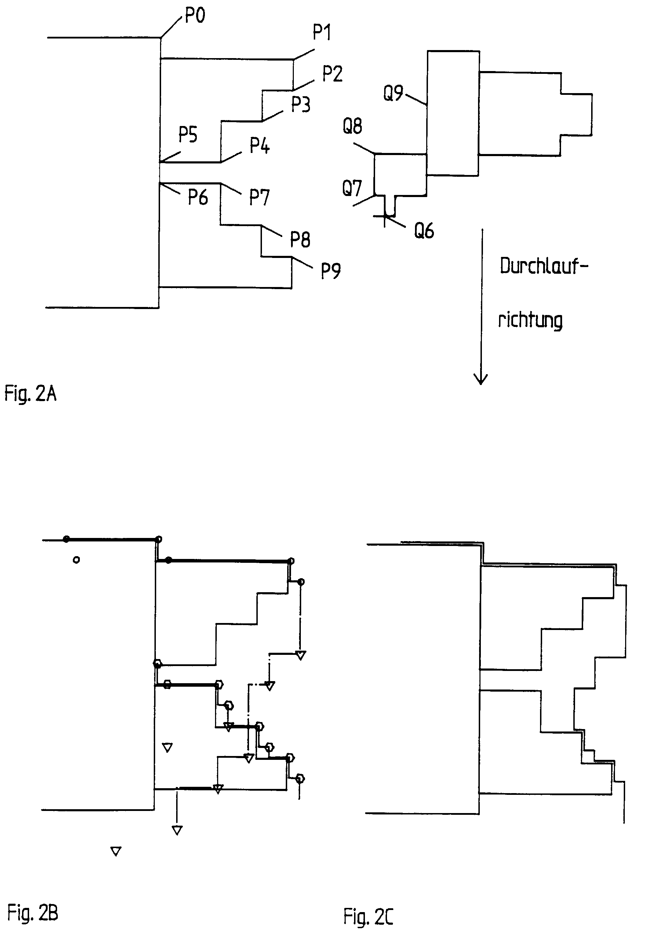

Im folgenden wird die Erfindung an Hand der Figuren 1 und 2 näher erläutert.

Es zeigen:
Figur 1 die Darstellung einer Arbeitsraumkontur für einen Reitstock, und
Figur 2 die Darstellung einer Arbeitsraumkontur für die Schutzzone eines Spannfutters mit Spannbacken.

In Figur 1A ist die Kontur eines Revolvers 1 und die Schutzzone 2 für einen Reitstock dargestellt. Bei der Schutzzone 2 handelt es sich um einen in Durchlaufrichtung monoton steigenden Konturzug, der die Eckpunkte P1 bis P4 enthält. Zur Ermittlung der Arbeitsraumkontur ist entsprechend der in Durchlaufrichtung monoton steigende Teil des Konturzuges 1 des Werkzeugrevolvers mit den Eckpunkten Q5 - Q1 zu betrachten.
Bei dem dargestellten Konturzug 1 wird der Bezugspunkt mit Q6 angenommen. Im vorliegenden Fall ist der Bezugspunkt die Werkzeugspitze.
Die Daten, aus denen die Konturen 1 und 2 für den Revolver und den Reitstock gebildet werden, werden vorzugsweise aus den Komponentenbeschreibungen und den Rüstdaten der Drehmaschine gewonnen.

In Figur 1B wird beispielhaft die Bestimmung eines Koordinatenpunktes für den Bezugspunkt Q6 dargestellt. Dazu werden die Eckpunkte Q1 des Werkzeugrevolvers und der Punkt P1 der Schutzzone überlagert. Für diese Konstellation werden die Koordinatendaten für Q6 bestimmt. Entsprechend werden auch die übrigen Eckpunkte jeweils paarweise überlagert und die Koordinatendaten für Q6 bestimmt.

Das Ergebnis dieser Koordinatenbestimmungen ist in Figur 1C dargestellt. Jeder der kleinen Kreise stellt einen Koordinatenwert für den Bezugspunkt Q6 dar, der aus jeweils einer Überlagerung bestimmt wird. Zur Bestimmung der Arbeitsraumkontur, d.h. der Grenzlinie, die der Bezugspunkt Q6, im vorliegenden Fall die Werkzeugspitze, nicht in Richtung der Schutzzone überschreiten darf, werden aus der Gesamtheit der Koordinatenwerte für Q6 diejenigen ausgewählt, die miteinander verbunden eine monoton steigende Kurve beschreiben.
In der Figur sind die entsprechenden Koordinaten miteinander verbunden. Die daraus entstehende Kurve bildet die Arbeitsraumkontur. Sie ist bezogen auf die Schutzzone dargestellt. Zur besseren Übersicht ist die Schutzzone gegenüber der entstandenen Arbeitsraumkontur leicht verschoben dargestellt. Der Pfeil Pf gibt die entgegengesetzte Richtung und den Betrag der Verschiebung an.

In vorteilhafter Weise wird die monoton steigende Kurve ermittelt, indem die Koordinatenwerte des Bezugspunktes in Durchlaufrichtung der Größe nach geordnet werden und die Punkte ausgewählt werden, deren Koordinatenwert in der zur Durchlaufrichtung senkrechten Richtung größer ist als die zum zuvor ausgewählten Punkt.

Figur 2 zeigt die Arbeitsraumkonturermittlung für die Schutzzone eines Spannfutters mit Spannbacken bezüglich eines Werkzeugrevolvers.
In Durchlaufrichtung ist die Schutzzone in drei Bereiche aufgeteilt. Den ersten Bereich bildet der monoton steigende Abschnitt mit den Eckpunkten P0 und P1, die mit den den Eckpunkten Q7 und Q6 im monoton steigenden Konturbereich des Werkzeugrevolvers überlagert werden. Den zweiten Bereich bildet der monoton fallende Abschnitt der Schutzzone mit den Eckpunkten P2, P3, P4 und P6, die mit den Eckpunkten Q9 und Q8 im monoton fallenden Konturbereich der Werkzeugrevolverkontur überlagert werden.

Den dritten Bereich bildet der monoton steigende Abschnitt der Schutzzone mit den Eckpunkten P5, P7, P8 und P9, die mit den Eckpunkten Q7 und Q6 im monoton steigenden Konturbereich der Werkzeugrevolverkontur überlagert werden.

Für jeden der drei Bereiche werden die Koordinaten für den Bezugspunkt Q6 durch paarweise Überlagerung der entsprechenden Eckpunkte bestimmt.

Die so erhaltenen Koordinaten sind in der Figur 2B für die einzelnen Bereiche dargestellt.
Für den ersten Bereich sind die Koordinatenpunkte für Q6 durch kleine Kreise dargestellt, für den zweiten, monoton fallenden Bereich sind die erhaltenen Koordinatenpunkte durch Dreiecke und für den dritten, monoton steigenden Bereich sind die Koordinatenpunkte durch Sechsecke dargestellt.

Aus den Koordinatenpunkten wird, wie zu Figur 1 beschrieben, für jeden der drei Bereiche eine monoton steigende bzw. monoton fallende Kurve ermittelt.

Auf diese Weise entstehen drei Konturzüge, die überlagert werden, um die Arbeitsraumkontur zu erhalten. Bei der Überlagerung werden jeweils die Konturbereiche ausgewählt, die in Bezug auf die zur Durchlaufrichtung senkrechten Richtung die größeren Werte einnehmen. Das Ergebnis der Überlagerung ist in der Figur 2C dargestellt, wobei auch dort zur besseren Veranschaulichung die Schutzzone gegenüber der Arbeitsraumkontur leicht veschoben dargestellt ist.

Die Arbeitsraumkontur bildet auch hier die Grenze, die vom Bezugspunkt Q6, also der Werkzeugspitze während des Bearbeitungsvorganges nicht in Richtung zur Schutzzone hin überschritten werden darf.

Die Arbeitsraumkontur wird bei jedem Beginn eines Arbeitsvorganges und bei einer Änderung des Aggregatzustandes, beispielsweise eines Werkzeugwechsels, neu bestimmt. Im Fall der automatischen Abarbeitung eines NC-Bearbeitungsprogrammes wird vor jedem Satz mit Verfahranweisung eine Kollisionsprüfung durchgeführt. Wird bei dieser Kollisionsprüfung festgestellt, daß der durch die Arbeitsraumkontur definierte Arbeitsraum verletzt wird, wird sofort ein Fehlersignal ausgegeben. Im Falle des Handsteuerbetriebes wird eine Heranführung der Werkzeugspitze an die Arbeitsraumkontur erlaubt, ein Überschreiten der Grenze ist nicht möglich.

## Patentansprüche

1. Verfahren zur zweidimensionalen Arbeitsraumkonturermittlung für eine Schutzzonenüberwachung für numerisch gesteuerte Drehmaschinen, wobei eine Schutzzone (2) durch Festlegen eines achsparallelen Konturzuges (P1, ..., P4) des Werkstückes und/oder der Werkstückumgebung festgelegt wird und ein Werkzeugkonturzug (Q1, ..., Q6) für die Teile des Werkzeuges inklusive der Werkzeughalterungen (1) bestimmt wird, die auf der der Schutzzone (2) zugewandten Seite liegen, und die Arbeitsraumkontur für einen bestimmten Bezugspunkt (Q6) des Werkzeugkonturzuges (Q1, ..., Q6) berechnet wird, dadurch gekennzeichnet, daß
- zumindest die nach außen gerichteten Kontureckpunkte (P1, ..., P4) der Schutzzone (2) und des Werkzeugkonturzuges (Q1, ..., Q6) ermittelt und als Koordinatenwerte gespeichert werden,
- für eine monoton steigende Schutzzone (2) jeder Kontureckpunkt (P1, ..., P4) der Schutzzone (2) mit jedem Eckpunkt des Werkzeugkonturzuges (Q1, ... Q6) überlagert wird und für jede Überlagerung der Koordinatenwert des Bezugspunktes (Q6) errechnet wird,
- ein Arbeitsraumkonturzug (Arbeitsraumkontur) ermittelt wird, indem in Durchlaufrichtung nacheinander diejenigen Koordinatenwerte, die miteinander verbunden einen monoton steigenden Konturzug ergeben, als Eckkoordinaten für den Arbeitsraumkonturzug (Arbeitsraumkontur) ausgewählt werden.

2. Verfahren nach Anspruch 1, dadurch gekennzeichnet, daß
- für die nichtmonotone Schutzzone (P0, ..., P9) eine Durchlaufrichtung (Durchlaufrichtung) bestimmt wird und die Schutzzone (P0, ..., P9) bezüglich dieser Durchlaufrichtung (Durchlaufrichtung) in monoton steigende und monoton fallende Bereiche aufgeteilt wird,
- für jeden der monoton steigenden und fallenden Bereiche der Schutzzone (P0, ..., P9) die Kontureckpunkte (Q6, ..., Q9) des Werkzeugkonturzuges in den entsprechenden achsparallelen monoton steigenden bzw. fallenden Bereichen mit den Konturpunkten der Schutzzone (P0, ..., P9) paarweise überlagert werden,
- für jede Überlagerung die Koordinatenwerte des Bezugspunktes (Q6) ermittelt werden,
- diese Koordinatenwerte in den monoton steigenden bzw. fallenden Bereichen in bzw. in entgegengesetzter Durchlaufrichtung der Größe nach geordnet werden und die Punkte ausgewählt werden, deren Koordinatenwert in der zur Durchlaufrichtung (Durchlaufrichtung) senkrechten Richtung größer ist als der zum zuvor ausgewählten Koordinatenpunkt.

3. Verfahren nach Anspruch 2, dadurch gekennzeichnet, daß bei mehreren gleichen Koordinatenwerten des Bezugspunktes (Q6) in Durchlaufrichtung (Durchlaufrichtung) der Punkt mit dem größten Wert in zur Durchlaufrichtung (Durchlaufrichtung) senkrechter Richtung ausgewählt wird.

4. Verfahren nach einem der Ansprüche 1 bis 3, dadurch gekennzeichnet, daß die Schutzzone (2) aus den Komponentenbeschreibung und den Rüstdaten der Drehmaschine errechnet werden.

5. Verfahren nach einem der Ansprüche 1 bis 4, dadurch gekennzeichnet, daß als Bezugspunkt (Q6) die Werkzeugspitze ausgewählt wird.

6. Verfahren nach einem der Ansprüche 1 bis 5, dadurch gekennzeichnet, daß der Arbeitsraumkonturzug bei der Steuerungsinitialisierung, beim Aufruf der Betriebsarten, nach einer Aggregatzustandsänderung, bei einem Werkzeugwechsel oder bei einer Änderung der Werkzeugkorrekturen neu bestimmt werden.

7. Verfahren nach einem der Ansprüche 1 bis 6, **dadurch gekennzeichnet**, daß in der Betriebsart Automatik für den in einem NC-Satz programmierten Weg vor der Ausführung des Satzes überprüft wird, ob die Bewegung außerhalb des Arbeitsraumes stattfindet und in diesem Fall eine Fehlermeldung ausgegeben wird.

8. Verfahren nach einem der Ansprüche 1 bis 6, dadurch gekennzeichnet, daß in der Betriebsart Handsteuern eine Verfahrbewegung bis an die Arbeitsraumkontur zugelassen wird.

## Claims

1. A method of two-dimensional working space contour determination for protected zone (2) monitoring for numerically controlled lathes, wherein a protected zone (2) is established by determining a contour course (P1, ..., P4) of the workpiece parallel to the axis and/or of the surroundings of the workpiece and a tool contour course (Q1, ..., Q6) is determined for the parts of the tool, including the tool holder (1), which lie on the side facing the protected zone (2), and the working space contour for a specific reference point (Q6) of the tool contour course (Q1, ..., Q6) is calculated, characterized in that
- at least the outwardly directed contour corner points (P1, ..., P4) of the protected zone (2) and of the tool contour course (Q1, .... Q6) are determined and stored as coordinate values,
- each contour corner point (P1, ..., P4) of the protected zone (2) for a monotonically rising protected zone (2) is superimposed on each corner point of the tool contour course (Q1, ..., Q6) and the coordinate data value of the reference point (Q6) is calculated for each superimposition,
- a working space contour course (Arbeitsraumkontur = working space contour) is determined, in that those coordinate values in sequence in the traverse direction which joined together yield a monotonically rising contour course are selected as corner coordinates for the working space contour course (Arbeitsraumkontur = working space contour).

2. A method according to claim 1, characterized in that
- a traverse direction (Durchlaufrichtung = traverse direction) is determined in the case of the non-monotonic protected zone (P0, ..., P9) and the protected zone (P0, ..., ..., P9) is divided for this traverse direction (Durchlaufrichtung = traverse direction) into monotonically rising and monotonically falling regions,
- the contour corner points (Q6, ..., Q9) of the tool contour course in the corresponding monotonically rising or falling regions parallel to the axis for each of the monotonically rising and falling regions of the protected zone (P0, ..., P9) are superimposed by pairs on the contour points of the protected zone (P0, ..., P9),
- the coordinate values of the reference point (Q6) are determined for each superimposition,
- these coordinate values are ordered by magnitude in the monotonically rising or falling regions in or opposite to the traverse direction and the points are selected whose coordinate value is greater in the direction perpendicular to the traverse direction (Durchlaufrichtung = traverse direction than the previously selected contour point.

3. A method according to claim 2, characterized in that with a plurality of equal coordinate values of the reference point (Q6) in the traverse direction (Durchlaufrichtung = traverse direction), the point with the greatest value in the direction perpendicular to the traverse direction (Durchlaufrichtung = traverse direction) is selected.

4. A method according to any of claims 1 to 3, characterized in that the protected zone (2) is calculated from the component description and the tooling data of the lathe.

5. A method according to any of claims 1 to 4, characterized in that the tool tip is selected as the reference point (Q6).

6. A method according to any of claims 1 to 5, characterized in that the working space contour course is redetermined on control initialisation, on loading the operating modes, after a change in the aggregate state, on a tool change or on an alteration of the tool corrections.

7. A method according to any of claims 1 to 6, characterized in that a check is made in the automatic operating mode for the path programmed in an NC block, before executing the block, whether the movement takes place outside the working space and an error message is issued in this case.

8. A method according to any of claims 1 to 6, characterized in that a feed movement up to the working space contour is permitted in the manually controlled operating mode.

## Revendications

1. Procédé pour la détermination bi-dimensionnelle du contour d'une enveloppe de travail pour une surveillance d'enveloppe de sécurité sur des tours à commande numérique, dans lequel on délimite une enveloppe de sécurité (2) en définissant une ligne de contour (P1,..., P4) de la pièce et/ou de l'environnement de la pièce parallèle à l'axe, on définit une ligne de contour d'outil (Q1,..., Q6) pour les parties d'outil, y compris les supports d'outil (1), qui sont situées du côté de l'enveloppe de sécurité (2) et on calcule le contour de l'enveloppe de travail pour un point de référence (Q6) donné de la ligne de contour d'outil (Q1,..., Q6, caractérisé en ce que
- l'on détermine au moins les points d'angle de contour (P1,..., P4) tournés vers l'extérieur de l'enveloppe de sécurité (2) et de la ligne dc contour d'outil (Q1,..., Q6) et on les mémorise en tant que valeurs de coordonnées,
- pour une enveloppe de sécurité (2) croissant de manière monotone on superpose chaque point d'angle (P1,..., P4) de l'enveloppe de sécurité (2) à chaque point d'angle du contour d'outil (Q1,..., Q6) et pour chaque superposition on calcule la valeur de coordonnée du point de référence (Q6),
- on détermine une ligne de contour d'enveloppe de travail (contour d'enveloppe de travail) en sélectionnant, comme valeurs de coordonnées d'angles pour la ligne de contour de l'enveloppe de travail (contour d'enveloppe de travail), les valeurs de coordonnées successives dans la direction de déplacement qui, liées les unes aux autres donnent une ligne de contour dont la croissance est monotone.

2. Procédé selon la revendication 1, caractérisé en ce que
- on détermine pour l'enveloppe de sécurité non monotone (P0,..., P9) une direction de déplacement (direction de déplacement) et on divise l'enveloppe de sécurité (P0,..., P9), par rapport à la direction de déplacement (direction de déplacement), en parties croissant ou décroissant de manière monotone,
- pour chacune des parties croissant ou décroissant de manière monotone de l'enveloppe de sécurité (P0,..., P9), on superpose deux à deux aux points de contour de l'enveloppe de sécurité (P0,..., P9) les points d'angle (Q6,..., Q9) de la ligne de contour d'outil dans les parties croissant ou décroissant de manière monotone concernées, parallèles à l'axe,
- on détermine pour chaque superposition les valeurs de coordonnées du point de référence (Q6)
- on classe par ordre d'importance dans la direction de déplacement ou la direction opposée au déplacement les valeurs de coordonnées dans les parties croissant ou décroissant de manière monotone et on sélectionne les points dont la valeur de coordonnée dans la direction perpendiculaire à la direction de déplacement (direction de déplacement) est supérieure au point de coordonnée précédemment sélectionné.

3. Procédé selon la revendication 2, caractérisé en ce que dans le cas de plusieurs valeurs de coordonnées identiques on sélectionne pour le point de référence (Q6), dans la direction de déplacement (direction de déplacement), le point qui présente la valeur la plus élevée dans la direction perpendiculaire à la direction de déplacement (direction de déplacement).

4. Procédé selon une des revendications 1 à 3, caractérisé en ce qu'on calcule l'enveloppe de sécurité (2) à partir des description de composants et des données d'équipement du tour.

5. Procédé selon une des revendications 1 à 4, caractérisé en ce que l'on sélectionne la pointe de l'outil comme point de référence (Q6).

6. Procédé selon une des revendications 1 à 5, caractérisé en ce que l'on procède à une nouvelle détermination de la ligne de contour de l'enveloppe de travail lors de l'initialisation de la commande, lors de la sélection des modes de fonctionnement, à la suite d'une modification d'état de l'ensemble, lors d'un changement d'outil ou lors d'une modification des corrections d'outil.

7. Procédé selon une des revendications 1 à 6, caracterisé en ce qu'en mode de fonctionnement automatique pour la course programmée pour le jeu d'instructions NC, on contrôle avant exécution dujeu d'instructions s'il y a déplacement en dehors de l'enveloppe de travail et dans ce cas on émet un message d'erreur.

8. Procédé selon une des revendications 1 à 6, caractérisé en ce qu'en mode à commande manuelle on admet un déplacement jusqu'au contour de l'enveloppe de travail.
